# EUROPÄISCHE PATENTANMELDUNG

(11) **EP 1 955 801 A2**
(43) Veröffentlichungstag der Anmeldung: **13.08.2008**
(21) Anmeldenummer: 08000531.7
(22) Anmeldetag: 12.01.2008
(51) Int. Cl.: B23D 45/04, B23D 47/02

(54) **Gehrungssäge mit Winkelfixierungseinrichtung**

(30) Priorität: 06.02.2007 DE 202007001945 U
(71) Anmelder: Metabowerke GmbH, 72622 Nürtingen (DE)
(72) Erfinder: Engelmann, Marcus, 49716 Meppen (DE)
(74) Vertreter: Gesthuysen, von Rohr & Eggert

(57) **Zusammenfassung**

Gegenstand der Erfindung ist eine Gehrungssäge mit einer Winkelfixierungseinrichtung zwischen einer Basis (2) und einem mit der Basis (2) schwenkbar verbundenen Sägeaggregat (10). Die Winkelfixierungseinrichtung weist eine Spanneinrichtung (11) und ein korrespondierendes Spannwiderlager (12) auf. Die erfindungsgemäße Gehrungssäge ist dadurch gekennzeichnet, daß das Spannwiderlager (12) als eine mindestens zwei einander gegenüberliegende Spannflächen (15) bildende Leiste, Platte oder Scheibe ausgeführt ist und daß die Spanneinrichtung (11) einen das Spannwiderlager (12) überfassenden Sattel (16) aufweist, der mit jeweils einer Flanke (17) einer Spannfläche (15) des Spannwiderlagers (12) gegenübersteht, und ein mit dem Sattel (16) in Eingriff stehendes, gegenüber dem Sattel (16) verstellbares Spannelement (18) aufweist, das gegen eine Spannfläche (15) anstellbar ist, wobei zeitgleich die gegenüberliegende Flanke (17) des Sattels (16) gegen die gegenüberliegende Spannfläche (15) anstellbar ist, oder das gegen beide Spannflächen (15) zugleich anstellbar ist, wodurch insgesamt die Spanneinrichtung (11) am Spannwiderlager (12) und damit das Sägeaggregat (10) gegenüber der Basis (2) kraftschlüssig fixiert wird.

## Beschreibung

Die Erfindung betrifft eine Gehrungssäge mit den Merkmalen des Oberbegriffs von Anspruch 1.

Gehrungssägen werden genutzt, um Werkstücke aus Holz, Metall oder anderen Materialien unter bestimmten Winkeln zu sägen. Gehrungssägen der in Rede stehenden Art gibt es in vielen verschiedenen Ausführungsformen, die für die vorliegende Erfindung in Frage kommen.

Eine typische Gehrungssäge ist häufig eine Kappsäge, bei der sich die Sägeeinrichtung oberhalb der Werkstückauflagefläche an einer horizontal verlaufenden Schwenkachse schwenkbar angeordnet befindet (DE-A-103 41 192). Durch Herunterschwenken der Sägeeinrichtung mit dem Kreissägeblatt gegen die Werkstückauflagefläche läßt sich ein Kappsägeschnitt in einem auf der Werkstückauf lagefläche liegenden Werkstück ausführen. Befindet sich bei diesem Kappsägeschnitt der Drehteller an der Grundplatte mit der daran befindlichen Sägeeinrichtung in einem Winkel zur Grundplatte, so entsteht der entsprechende Gehrungswinkel am Werkstück.

Eine Kapp- und Gehrungssäge wird zur Doppel-Gehrungssäge, wenn nicht nur ein Drehteller an der Grundplatte um eine entsprechende Hochachse drehbar gelagert ist, sondern die Sägeeinrichtung ihrerseits am Drehteller auch noch um eine parallel zu der oder in der Ebene des Drehtellers verlaufende Schwenkachse seitlich schwenkbar ist. Dadurch wird die seitliche Neigung der Sägeeinrichtung verändert. Man kann so Doppel-Gehrungsschnitte an Werkstücken ausführen (DE-A-103 41 192).

Bekannt sind auch kombinierte Kapp-, Gehrungs- und Tischkreissägen mit einer wendbar gelagerten Grundplatte mit eingelassenem Drehteller (DE-A-38 07 158). Diese sind in einer Stellung der Grundplatte als Tischkreissäge nutzbar, in der anderen Stellung der Grundplatte haben sie die Funktion einer Kapp- und Gehrungssäge.

Gehrungssägen im Sinne der vorliegenden Erfindung sind aber nicht nur Sägen mit einem Sägeblatt, sondern auch Bandsägen. Bei diesen befindet sich am Gestell der Säge ein um eine horizontal verlaufende Achse schwenkbarer Werkstücktisch, der in der Terminologie der vorliegenden Erfindung die eine Werkstückauflagefläche bildende Basis darstellt. Auch hier erfolgt durch Schwenkung der Werkstückauflagefläche relativ zur Sägeeinrichtung, hier dem Sägeband der Bandsäge, eine Veränderung der Neigung des Werkstückes und damit die Möglichkeit, im Werkstück einen Gehrungsschnitt auszuführen (DE-A-33 25 211).

Eine weitere Gehrungssäge ist als Handwerkzeug bekannt, nämlich eine Handkreissäge. Bei dieser ist die Werkstückauflagefläche an der Unterseite der Basis gebildet, an deren Oberseite sich das Sägeaggregat befindet. Das Sägeaggregat selbst hat einen Handgriff und einen Motor und die Basis ist eine Art Rahmen, der die Relativlage des Sägeaggregates zur Oberseite des zu sägenden Werkstükkes definiert. Auch dort stellt sich das Problem der Fixierung des Winkels mittels einer Winkelfixierungseinrichtung, um auch Gehrungsschnitte im Werkstück ausführen zu können (DE-U-202 12 403).

Die Gehrungssäge, von der die Erfindung ausgeht (DE-A-103 41 192), ist eine klassische Kapp- und Gehrungssäge, die zur Ausführung von Doppel-Gehrungsschnitten geeignet ist und daher sowohl eine Winkelfixierungseinrichtung zwischen dem Drehteller und der Grundplatte, als auch ein solche zwischen dem Sägeaggregat und dem Drehteller aufweist. Bei beiden Winkelfixierungseinrichtungen werden die beiden beteiligten Bauteile mit Hilfe mindestens eines weiteren Bauteils, in der Regel einer Gewindestange oder einer Hebelmechanik, an einer Stelle mit genau einer Reibpaarung kraftschlüssig gegeneinander fixiert. Die kraftschlüssige Fixierung sichert die Relativlage der beteiligten Bauteile zueinander und damit den Gehrungswinkel.

Die zuvor erläuterte Ausführung der Winkelfixierungseinrichtung bei einer Gehrungssäge der in Rede stehenden Art wird seit Jahrzehnten als hinreichend empfunden. Ungeachtet dessen liegt der Lehre das Problem zugrunde, die Ausführung der Winkelfixierungseinrichtung kraftübertragungstechnisch zu optimieren.

Das zuvor erläuterte Problem wird nach der Lehre der Erfindung durch die Merkmale des kennzeichnenden Teils von Anspruch 1 gelöst. Insbesondere von Vorteil ist die Ausführung von Anspruch 2.

Das die beiden einander gegenüberliegenden Spannflächen bildende Spannwiderlager kann ein einfaches gerades Bauteil sein. Da es sich aber um eine Schwenkbewegung handelt, kann es sich auch um ein Bauteil handeln, dessen Spannflächen durch zueinander konzentrisch liegende Kreisbögen definiert werden. Regelmäßig wird es sich nicht um einen Vollkreis, sondern eher um einen Teilkreis entsprechend dem in der Praxis zu erwartenden maximalen Schwenkwinkel handeln.

Bei der erfindungsgemäßen Gehrungssäge ist die Winkelfixierungseinrichtung mit Spannwiderlager und Spanneinrichtung nach Art einer Kraftfahrzeug-Scheibenbremse ausgestaltet. Insbesondere gilt dies, wenn der Sattel schwimmend ausgestaltet ist. Es ergeben sich so einander gegenüberliegende und entgegengerichtete Spannflächen, so daß sehr hohe Spannkräfte wie bei einer Scheibenbremse oder einer Schraubzwinge aufgebracht werden können. Die mechanische Belastung der gesamten Gehrungssäge ist damit auf die Winkelfixierungseinrichtung beschränkt, deren Auslegung kann auf die auftretenden Fixierungskräfte (Bremskräfte) abgestimmt werden. Insbesondere bleibt auch die jeweils betroffene Schwenklagerung kräftefrei.

Das Konstruktionsprinzip der erfindungsgemäßen Gehrungssäge hinsichtlich deren Winkelfixierungseinrichtung ist bei allen zuvor erläuterten Arten von Gehrungssägen anwendbar, weil es immer um dasselbe Problem der wirksamen kraftschlüssigen Fixierung von zwei miteinander zusammenwirkenden Bauteilen geht, die zur Einstellung eines bestimmten Gehrungswinkels in unterschiedliche Winkelstellungen zueinander zu bringen sind.

Bevorzugte Ausgestaltungen und Weiterbildungen der Lehre der Erfindung sind Gegenstand der Unteransprüche.

Von besonderer Bedeutung ist auch, daß das Grundprinzip der Lehre der vorliegenden Erfindung kinematisch umgekehrt realisiert werden kann, nämlich dadurch, daß das Spannwiderlager als vorzugsweise kreisbogenförmige Nutenschiene ausgeführt ist und die Spanneinrichtung eine in die Nutenschiene eingreifende, zwei nach außen weisende Flanken bildende Spreizeinrichtung auf weist. In diesem Fall greift die Spanneinrichtung nicht als Sattel über das Spannwiderlager, sondern als Spreizeinrichtung in das Spannwiderlager hinein, findet aber auch dort zwei einander gegenüberstehende und einander entgegengerichtete Spannflächen vor, so daß im Prinzip dieselben Vorteile auftreten.

Von besonderer und eigenständiger Bedeutung ist auch die Lehre des Anspruchs 12, die in besonders zweckmäßiger Weise mit der Lehre der Ansprüche 1 bis 11 kombiniert werden kann. Hier gewinnt die Winkelfixierungseinrichtung eine zusätzliche Funktion, die die Gehrungssäge insgesamt noch besser stabilisiert.

Die Erfindung und die mit den weiteren Ausgestaltungen verbundenen Vorteile werden in Verbindung mit der Erläuterung einer bevorzugter Ausführungsformen der vorliegenden Erfindung anhand der Zeichnung näher erläutert. In der Zeichnung zeigt
- Fig. 1: in perspektivischer Ansicht ein Ausführungsbeispiel einer erfindungsgemäßen Gehrungssäge,
- Fig. 2: in vergrößerter Darstellung, den Drehteller der Gehrungssäge abgenommen, den Bereich der Winkelfixierungseinrichtung,
- Fig. 3: den in Fig. 2 dargestellten Bereich, nochmals weiter vergrößert, in einer Draufsicht,
- Fig. 4: in einer Fig. 3 entsprechenden Darstellung das Kraftverteilungselement der Winkelfixierungseinrichtung aus Fig. 2,
- Fig. 5: das Grundprinzip einer Neigungswinkel-Fixierungseinrichtung gemäß der Erfindung,
- Fig. 6: in einer Fig. 4 ähnlichen ausschnittsweisen Darstellung ein weiteres Ausführungsbeispiel einer erfindungsgemäßen Winkelfixierungseinrichtung,
- Fig. 7: das Grundprinzip einer kinematisch umgekehrten Konstruktion der erfindungsgemäßen Winkelfixierungseinrichtung.

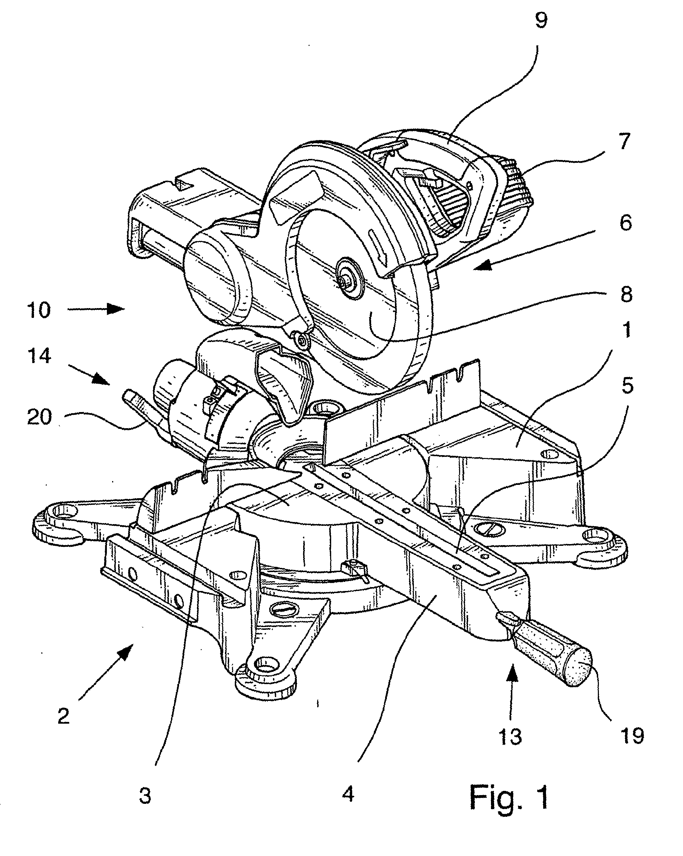

Die Erfindung wird nun anhand einer in Fig. 1 dargestellten, ein bevorzugtes Ausführungsbeispiel bildenden Kapp- und Gehrungssäge erläutert.

Die in Fig. 1 beispielhaft dargestellte Gehrungssäge weist zunächst eine eine Werkstückauflagefläche 1 bildende Basis 2 auf. Im dargestellten Ausführungsbeispiel ist die Basis 2 als Träger mit einer mittigen Ausnehmung ausgeführt. In die mittige kreisförmige Ausnehmung ist ein Drehteller 3 eingesetzt. Der Drehteller 3 ist an der Basis 2 um seine Hochachse drehbar gelagert. Der Drehteller 3 weist einen Auslegerarm 4 mit einem Eintauchschlitz 5 auf. Am Drehteller 3 ist eine Kapp-Sägeeinrichtung 6 schwenkbar gelagert, wobei deren Schwenkung um eine in der Ebene des Drehtellers 3 verlaufende Schwenkachse erfolgt. Die Kapp-Sägeeinrichtung 6 weist einen Antriebsmotor 7, ein davon angetriebenes Kreissägeblatt 8 sowie einen Betätigungs-Handgriff 9 auf. Letzterer dient dazu, das Kreissägeblatt 8 samt Antriebsmotor 7 zur Ausführung eines Kappschnittes nach unten gegen die Werkstückauflagefläche 1 an Basis 2 und Drehteller 3 zu schwenken. Im einzelnen wird für die Funktionsweise auf die DE-A-103 41 192 und andere einschlägige Veröffentlichungen verwiesen.

Im dargestellten Ausführungsbeispiel bilden der Drehteller 3 und die daran befindliche Kapp-Sägeeinrichtung 6 gemeinsam das Sägeaggregat 10 relativ zur die Basis 2 bildenden feststehenden Grundplatte. Die Kapp-Sägeeinrichtung 6 als solche bildet das Sägeaggregat 10 relativ zum Drehteller 3, wenn man nur diesen Teil der Gehrungssäge betrachtet.

Wesentlich ist, daß zwischen der Basis 2 und dem Sägeaggregat 10 eine Winkelfixierungseinrichtung vorgesehen ist, die eine am Sägeaggregat 10 vorgesehene Spanneinrichtung 11 sowie ein korrespondierend an der Basis 2 vorgesehenes Spannwiderlager 12 aufweist. Mittels der Winkelfixierungseinrichtung ist der Schwenkwinkel des Sägeaggregates 10 gegenüber der Basis 2 kraftschlüssig fixierbar.

In den Fig. 1 bis 4 ist die Lehre der Erfindung dargestellt mit Bezug auf die Grundplatte als Basis 2 und den Drehteller 3 mitsamt der Kapp-Sägeeinrichtung 6 als Sägeaggregat 10. In Fig. 1 ist insoweit eine erste Winkelfixierungseinrichtung 13 am Auslegerarm 4 angedeutet. Eine zweite Winkelfixierungseinrichtung 14 findet sich rückseitig an der Kapp- und Gehrungssäge. Sie ist zwischen der Kapp-Sägeeinrichtung 6 einerseits und dem Drehteller 3 andererseits wirksam und führt zur kraftschlüssigen Fixierung der Kapp-Sägeeinrichtung 6 bei einer bestimmten Seitenneigung in Folge einer Schwenkung um eine in der Ebene des Drehtellers 3 verlaufende Schwenkachse.

Ferner ist darauf hinzuweisen, daß die Zuordnung der Spanneinrichtung 11 und des Spannwiderlagers 12 zu Basis 2 und Sägeaggregat 10 auch genau umgekehrt sein kann.

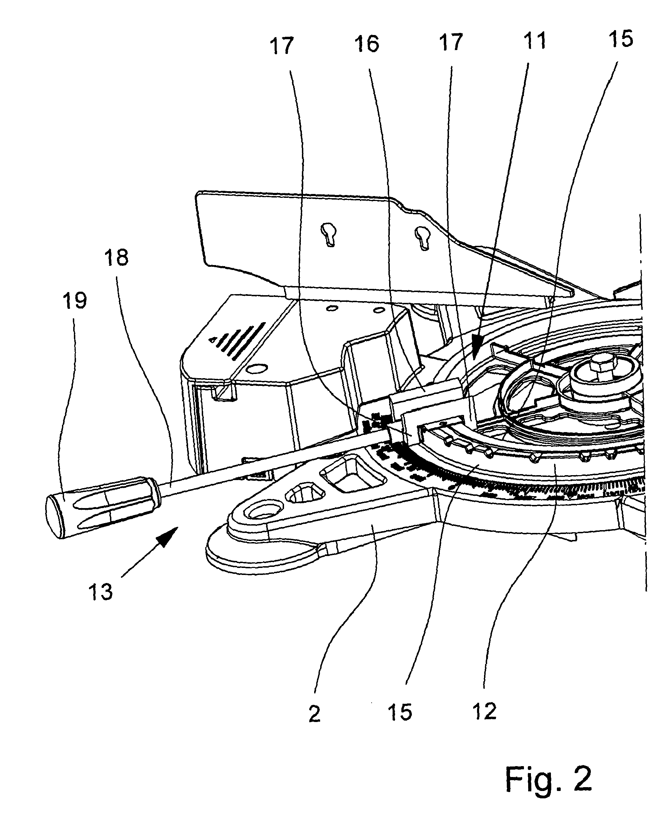

Anhand der Fig. 2 bis 4 wird nun die Ausführung der ersten Winkelfixierungseinrichtung 13 im Detail erläutert. Dadurch wird gleichzeitig beispielhaft die Lehre der Erfindung erläutert.

Im dargestellten Ausführungsbeispiel ist das Spannwiderlager 12 als eine zwei einander gegenüberliegende Spannflächen 15 bildende Leiste, und zwar hier als kreisbogenförmige Leiste ausgeführt. Die Spannflächen 15 des Spannwiderlagers 12 verlaufen hier also nicht wie bei einer Platte parallel zueinander, sondern werden von konzentrisch liegenden Kreisbögen gebildet, die ihren Kreismittelpunkt im Drehpunkt des Drehtellers 3 haben.

Die Spanneinrichtung 11 weist einen das Spannwiderlager 12 überfassenden Sattel 16 auf, der mit jeweils einer Flanke 17 einer Spannfläche 15 des Spannwiderlagers 12 gegenübersteht. Man erkennt das besonders gut in Fig. 2. Mit dem Sattel 16 steht ein Spannelement 18 in Eingriff, das gegenüber dem Sattel 16 verstellbar ist. Im dargestellten Ausführungsbeispiel handelt es sich bei dem Spannelement 18 um eine Gewindestange. Ein Betätigungsknauf 19 des Spannelementes 18 der ersten Winkelfixierungseinrichtung 13 am Auslegerarm 4 läßt sich in Fig. 1 erkennen. In entsprechender Weise befindet sich rückseitig in Fig. 1 ein Betätigungsknebel 20 eines Spannelementes 18 der dort zusätzlich vorgesehenen zweiten Winkelfixierungseinrichtung 14 für die Fixierung der Neigung der Kapp-Sägeeinrichtung 6 gegenüber dem Drehteller 3.

Das Spannelement 18 ist gegen eine Spannfläche 15 des Spannwiderlagers 12 anstellbar. Zeitgleich wird die gegenüberliegende Flanke 17 des Sattels 16 gegen die gegenüberliegende Spannfläche 15 des Spannwiderlagers 12 angestellt.

Eine Alternative besteht auch darin, das Spannelement 18 konstruktiv so auszugestalten, beispielsweise durch eine Umlenkungsanordnung, daß es gegen beide Spannflächen 15 des Spannwiderlagers 12 zugleich anstellbar ist. Das ist in der Zeichnung allerdings nicht dargestellt.

Wesentlich ist, daß insgesamt die Spanneinrichtung 11 am Spannwiderlager 12 auf diese Weise kraftschlüssig fixiert wird, wodurch im Ergebnis das Sägeaggregat 10 gegenüber der Basis 2 kraftschlüssig fixiert wird. Das geschieht aber anders als im Stand der Technik, nämlich hier nach Art einer Scheibenbremse oder einer Schraubzwinge, so daß sich die zur kraftschlüssigen Fixierung zu erzeugenden Kräfte gegenseitig kompensieren und ihre Gegenkräfte innerhalb der Spanneinrichtung 11, insbesondere vom Sattel 16 aufgenommen werden. Die übrigen Bauteile der Gehrungssäge werden also von diesen Kräften nicht beansprucht.

Zeitgleich im Sinne der Lehre der vorliegenden Erfindung bedeutet nicht zwingend gleichzeitig. Es geht dabei um einen bei einer Betätigung des Spannelementes 18 in zeitlichem Zusammenhang erfolgenden Ablauf, durch den die Spannwirkung der Spanneinrichtung 11 am Spannwiderlager 12 erreicht wird. Diese kann beispielsweise auch dadurch erreicht werden, daß zunächst eine Flanke 17 des Sattels 16 an einer Spannfläche 15 zur Anlage kommt und dann die gegenüberliegende Flanke 17 des Sattels 16 an die gegenüberliegende Spannfläche 15 des Spannwiderlagers 12 herangezogen wird bis die kraftschlüssige Fixierung schließlich erreicht ist.

Die Darstellungen in den Fig. 2 bis 4 zeigen, daß im dargestellten und insoweit bevorzugten Ausführungsbeispiel der Sattel 16 das Spannwiderlager 12 mit Spiel überfaßt, nämlich hier schwimmend angeordnet ist. Der Sattel 16 richtet sich so bei gelockertem Spannelement 18 eigenständig auf dem Spannwiderlager 12 aus und behindert die Drehbewegung des Drehtellers 3 im dargestellten Ausführungsbeispiel nicht.

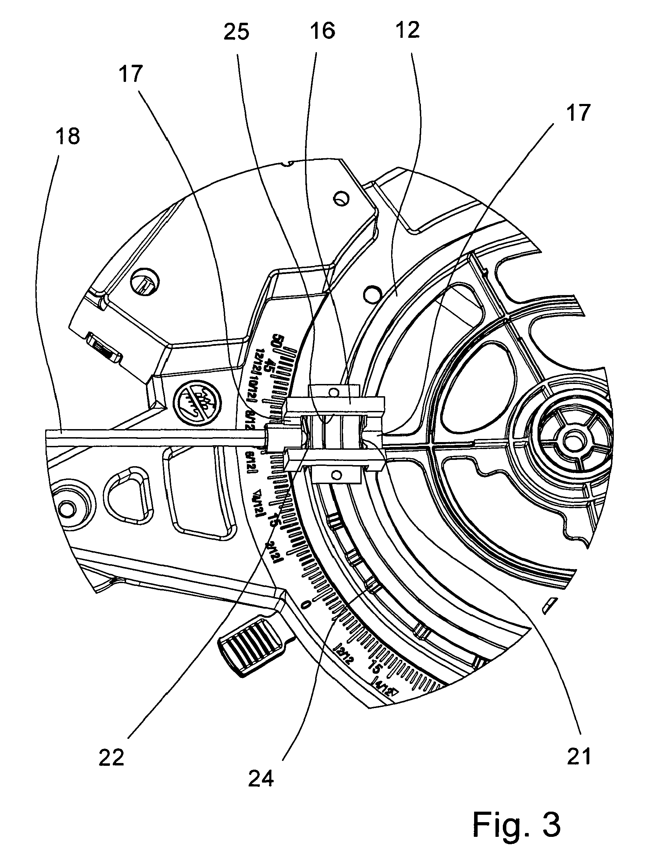

Man muß sich bei der Betrachtung von Fig. 2 und 3 darüber im Klaren sein, daß der Drehteller 3 hier abgenommen, der Sattel 16 bei aufgesetztem Drehteller 3 aber an der Unterseite des Drehtellers 3 fest angebracht ist.

Fig. 3 läßt für das dargestellte Ausführungsbeispiel besonders gut erkennen, daß das Spannelement 18 mit einer Flanke 17 des Sattels 16 in Eingriff steht und an der gegenüberliegenden Flanke 17 des Sattels 16 ein feststehendes Gegenstück 21 angeordnet ist. Das kann auch eine Madenschraube oder ein eingeformter Wulst o. dgl. sein. Die in Fig. 3 dargestellte Konstruktion erfordert den verstellbaren, also schwimmend angeordneten Sattel 16.

Es ist schon ausgeführt worden, daß im dargestellten und bevorzugten Ausfiihrungsbeispiel das Spannelement 18 als Gewindestange ausgeführt und in eine durchgehende Gewindebohrung in einer Flanke 17 des Sattels 16 eingeschraubt ist. Man erkennt das in Fig. 3 besonders gut. Man kann, auch unter Beibehaltung der Gewindestange, die Konstruktion aber auch so wählen, daß beide Flanken 17 des Sattels 16 gegenüber einem Quersteg des Sattels 16 verstellbar sind und das Spannelement 18 an beiden Flanken 17 angreift und diese gegenläufig zueinander verstellt. Das ist z. B. durch eine mit einem Gewinde wechselnder Steigung versehene Gewindestange realisierbar und entspricht einer Technik von Schraubzwingen mit zwei verstellbaren Pratzen.

Grundsätzlich kann das Spannelement 18 auch hydraulisch oder pneumatisch ausgebildet sein, z. B. das wie bei einer hydraulischen Scheibenbremse.

Das dargestellte und insoweit bevorzugte Ausführungsbeispiel zeigt weiter, daß zwischen dem Sattel 16 und dem Spannwiderlager 12, insbesondere an den Spannflächen 15, ein Kraftverteilungselement 22 angeordnet ist, über das das Spannelement 18 am Spannwiderlager 12 angreift. Im vorliegenden Ausführungsbeispiel ist vorgesehen, daß das Kraftverteilungselement 22 das Spannwiderlager 12 ebenfalls sattelartig überfaßt.

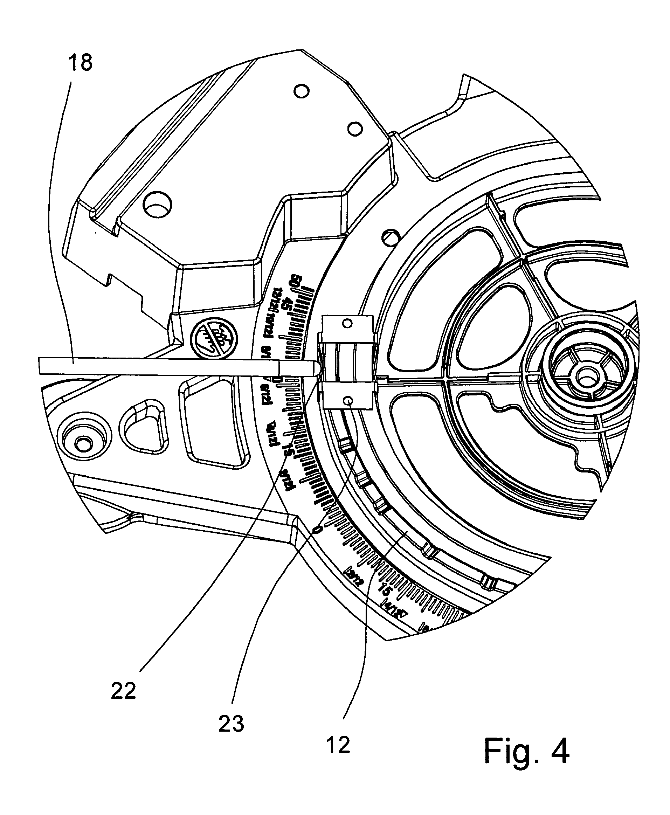

In Fig. 4 erkennt man das Kraftverteilungselement 22 für sich, der Sattel 16 ist hier zur Verdeutlichung der Anordnung weggelassen worden.

Das Kraftverteilungselement 22 ist in sich verformbar und läßt es so zu, daß die Spannkraft vom Spannelement 18 ausgehend in das Spannwiderlager 12 eingeleitet wird. Das dargestellte und bevorzugte Ausführungsbeispiel zeigt, wie zuvor erläutert worden ist, eine kreisbogenförmige Leiste als Spannwiderlager 12. Der Sattel 16 der Spanneinrichtung 11 hingegen hat einen rechteckigen Ausschnitt. Das Kraftverteilungselement 22 dient im dargestellten Ausführungsbeispiel demzufolge auch der Überbrückung der unvermeidlichen Abstände der Bauteile voneinander.

Im dargestellten und insoweit bevorzugten Ausführungsbeispiel ist vorgesehen, daß das Kraftverteilungselement 22 ein Metallformteil ist, hier ein Blechbiegeteil. Das Kraftverteilungselement 22 wird nach bevorzugter Lehre in einer zweiten Funktion auch dazu genutzt, den Sattel 16 an der Unterseite des Drehtellers 3, also am Sägeaggregat 10 zu befestigen. Dazu erkennt man Löcher 23 in den seitlichen Flanschen des Kraftverteilungselementes 22. Von unten nach oben werden dort Schrauben hindurchgesteckt und in Gewindebohrungen auf der Unterseite des Drehtellers 3 an der vorgesehenen Stelle, im vorliegenden Beispiel dort, wo der Auslegerarm 4 sitzt, eingeschraubt. Der Sattel 16 läßt sich in Fig. 3 gegenüber dem Kraftverteilungselement 22 nach rechts und links ein wenig verschieben (schwimmende Lagerung), wird aber in Umfangsrichtung mittels des Kraftverteilungselements 22 an der vorgesehenen Stelle fixiert.

In den meisten Fällen sind Basis 2 und Drehteller 3 einer Gehrungssäge der in Rede stehenden Art aus Metall ausgeführt, insbesondere als Metall-Gußteile. Häufig ist eine Ausführung als Aluminium-Druckgußteil vorgesehen. Demzufolge empfiehlt es sich, daß das Spannwiderlager 11 und/oder der Sattel 16 als Metallteile, insbesondere als Metall-Gußteile, ausgeführt ist/sind. Grundsätzlich ist bei anderen Beanspruchungen auch die Möglichkeit gegeben, entsprechende Bauteile als vorzugsweise faserverstärkte Kunststoffteile auszuführen.

Das in Fig. 2 und 3 dargestellte Ausführungsbeispiel läßt ferner eine Besonderheit erkennen, die mit einer Ausstattungsvariante der dargestellten Kapp- und Gehrungssäge zu tun hat. Diese erlaubt es nämlich, das Sägeaggregat 10, also die Einheit aus Drehteller 3 und Kapp-Sägeeinrichtung 6, gegenüber der Basis 2 in bestimmten, feststehenden Schwenkwinkeln formschlüssig zu fixieren. Man kann beispielsweise typische Gehrungswinkel wie 45° bereits durch eine Formschlußkonstruktion vorgeben.

Die in Fig. 2 und 3 dargestellte Gehrungssäge zeichnet sich insoweit nun dadurch aus, daß am Spannwiderlager 12 zwischen den Spannflächen 15 Formschlußausformungen 24, insbesondere Kerben, voneinander beabstandet vorgesehen sind, über die der Schwenkwinkel des Sägeaggregates 10 gegenüber der Basis 2 mit bestimmten, festen Werten fixierbar ist. Dies ist aus dem Stand der Technik bekannt. Neu ist dabei jedoch, daß der Sattel 16 und, so vorhanden, das Kraftverteilungselement 22 mittig eine Durchgriffsöffnung 25 für die Formschlußausformungen 24 aufweist. Damit ist es möglich, die bisherige Konstruktion einer formschlüssigen Rastverbindung, die ebenfalls am Auslegerarm 4 angeordnet ist, beizubehalten.

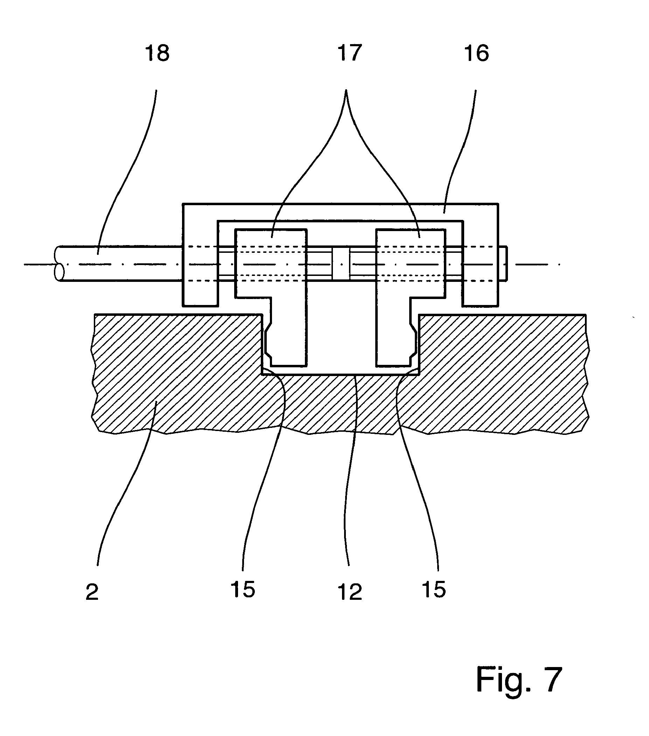

Fig. 7 zeigt eine invertierte Anordnung der Winkelfixierungseinrichtung, für die gilt, daß das Spannwiderlager 12 als vorzugsweise kreisbogenförmige Nutenschiene ausgeführt ist und die Spanneinrichtung 11 eine in die Nutenschiene eingreifende, zwei nach außen weisende Flanken 17 bildende Spreizeinrichtung aufweist.

Grundsätzlich ist es auch möglich, zwischen dem Spannwiderlager 12 und dem Sattel 16 mehrere Flächenpaare auszubilden, beispielsweise 3, 4 oder 5 Flächenpaare, auf die sich dann die Kräfte verteilen können. Derartige Mehrflächen-Fixierungsvorrichtungen sind aus anderen Anwendungsgebieten bekannt und können hier adaptiert werden.

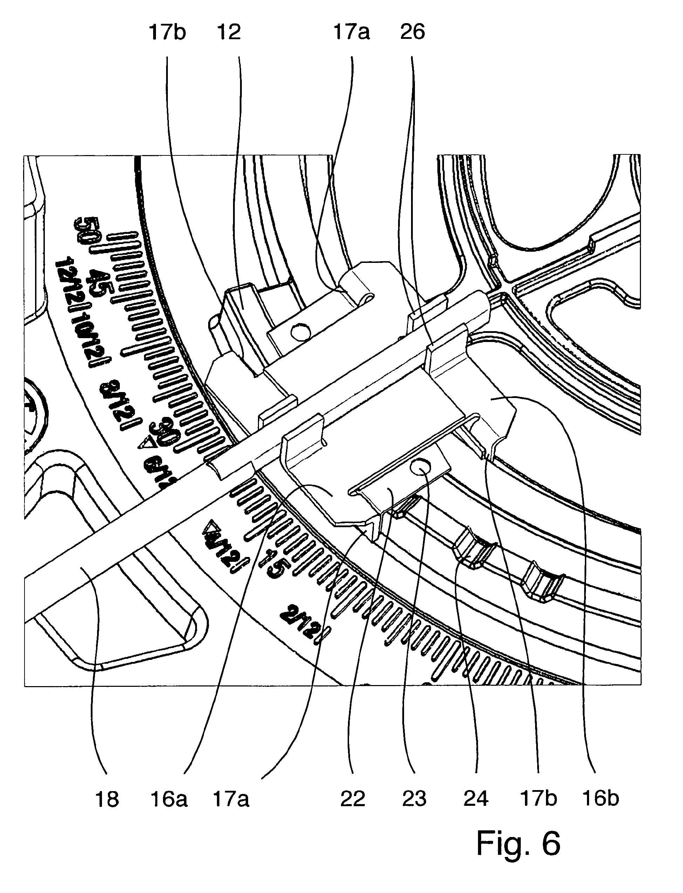

Das in Fig. 6 dargestellte Ausführungsbeispiel zeigt eine weitere Ausführungsform der Erfindung, bei der vorgesehen ist, daß der Sattel 16 mehrteilig ausgeführt ist. Der Sattel 16 hat also einen ersten Teil 16a mit Flanken 17a und einen zweiten Teil 16b mit Flanken 17b. Die beiden Teile 16a, 16b sind gewissermaßen über Kreuz angeordnet und werden auch im Ausführungsbeispiel von Fig. 6 durch das Kraftverteilungselement 22, das auch hier ein Metallformteil ist, von unten her am Drehteller 3 gehalten. Mittels entsprechender Kraftübertragungselemente 26 erfolgt die Kraftübertragung vom Spannelement 18 auf die Teile 16a, 16b des Sattels 16. Dazu ist im dargestellten und bevorzugten Ausführungsbeispiel das Spannelement 18 nicht als Gewindestange, sondern als Exzenterstange ausgeführt und zwischen den Kraftübertragungselementen 26 angeordnet. Dreht man das Spannelement 18, so werden die Kraftübertragungselemente 26 der Teile 16a, 16b von der Stellung in Fig. 6 ausgehend auseinandergedrückt. Dadurch werden die beiden miteinander über Kreuz angeordneten Teile 16a, 16b gegeneinander verschwenkt und mit ihren Flanken 17a, 17b gegen die Spannflächen 15 des Spannwiderlagers 12 gedrückt. Die Teile 16a, 16b sind im dargestellten Ausführungsbeispiel als Metallbiegeteile ausgeführt, so daß auch die Kraftübertragungselemente durch hochgebogene Laschen der Metallbiegeteile gebildet werden können. Insbesondere kommt hier Edelstahl in Frage.

Wie bereits zuvor ausgeführt worden ist, zeigt das Ausführungsbeispiel einer erfindungsgemäßen Gehrungssäge gemäß Fig. 1 bis 4 eine Kapp- und Gehrungssäge mit zwei Winkelfixierungseinrichtungen 13 und 14.

Die zuvor erläuterte erste Winkelfixierungseinrichtung 13 ist eine solche zwischen der die Basis 2 bildenden Grundplatte und dem Drehteller 3 als Teil des Sägeaggregates 10. Die Schwenkbewegung ist hier eine solche um die Hochachse des Drehtellers 3.

Demgegenüber ist die zweite Winkelfixierungseinrichtung 14 eine solche, bei der der Drehteller 3 die Basis 2 darstellt und das Sägeaggregat 10 von der Kapp-Sägeeinrichtung 6 gebildet ist. Die Schwenkbewegung erfolgt zwischen diesen Bauteilen um eine parallel zu der oder in der Ebene des Drehtellers 3 verlaufende Schwenkachse. Das ist die Neigungsverstellung bei der Kapp- und Gehrungssäge gemäß Fig. 1.

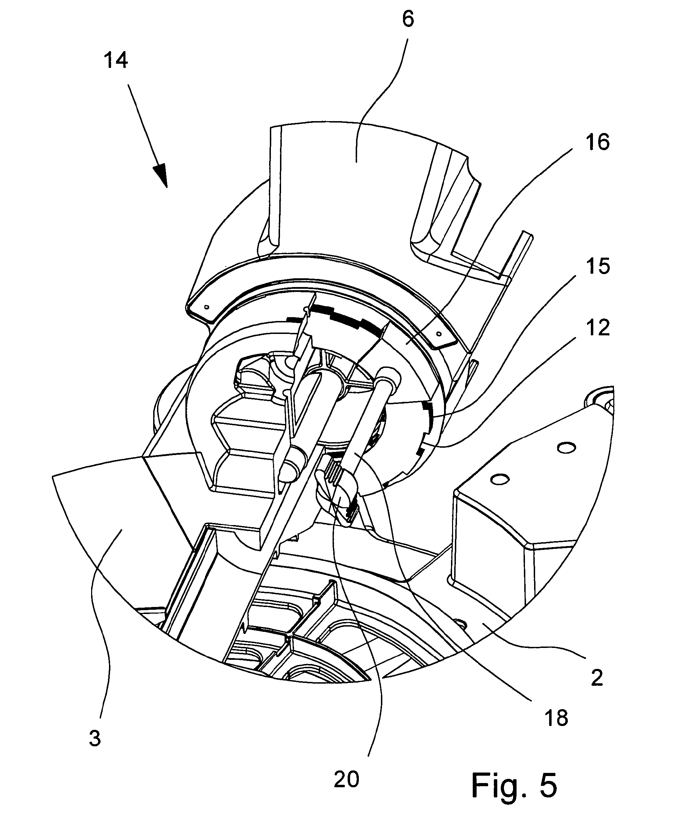

Fig. 5 zeigt die Konstruktion der Winkelfixierungseinrichtung 14 für die Neigungsverstellung der Kapp- und Gehrungssäge gemäß Fig. 1. Diese ist hier nur schematisch dargestellt und zeigt eine kreisbogenförmige Platte, die das Spannwiderlager 12 mit seinen einander gegenüberliegenden Spannflächen 15 bildet. Das Spannelement 18 ist auch hier eine Gewindestange, die in diesem Fall von einem nach vorn ragenden Betätigungsknebel 20 verstellbar ist.

Fig. 5 zeigt die Winkelfixierungseinrichtung 14 für die Neigungsverstellung an der Rückseite des Drehtellers 3, wenn man die Position der Winkelfixierungseinrichtung 13 am Auslegerarm 4 gemäß Fig. 1 als Vorderseite betrachtet. Das ist bedienungstechnisch zu verstehen, weil eine Bedienungsperson eben meist vor der in Fig. 1 dargestellten Gehrungssäge steht.

Man erkennt in Fig. 1 die Lagerung der Kapp-Sägeeinrichtung 6 an der Rückseite des Drehtellers 3. Bei dieser Anordnung kann nun die Winkelfixierungseinrichtung 13 für den Drehteller 3 an der Basis 2 gegebenenfalls als zusätzliche Stabilisierung eingesetzt werden. Das gilt dann, wenn die Winkelfixierungseinrichtung 13 an der Seite des Drehtellers 3 angeordnet ist, an der auch die Kapp-Sägeeinrichtung 6 gelagert ist. Im dargestellten Ausführungsbeispiel wäre das also die Rückseite. Die Klemmung mittels der Winkelfixierungseinrichtung 13 führt zu einer Stabilisierung des Drehtellers 3 gegenüber der Basis genau dort, wo auch die Kräfte von der Kapp-Sägeeinrichtung 6 in den Drehteller eingeleitet werden. Diese Konzeption ist auch für sich von erheblicher Bedeutung.

Ungeachtet der zuvor beschriebenen, rückwärtigen Anordnung der Winkelfixierungseinrichtung für den Drehteller 3 empfiehlt es sich aber, es bei der Bedienung von vorne zu belassen, so daß sich dann das Spannelement 18 bzw. eine dieses Spannelement 18 ersetzende komplexere Anordnung von hinten nach vorn quer durch den oder unter dem Drehteller 3 hindurch erstreckt.

Abschließend darf nochmals daran erinnert werden, daß die gesamte Konstruktion der Winkelfixierungseinrichtungen auch für eine Handkreissäge gilt, bei der die Werkstückauflagefläche 1 an der Basis 2 nach unten auf das unter der Säge befindliche Werkstück gerichtet ist (DE-U-202 12 403).

## Patentansprüche

1. Gehrungssäge mit
einer eine Werkstückauflagefläche (1) bildenden Basis (2),
einem mit der Basis (2) schwenkbar verbundenen Sägeaggregat (10) und
einer Winkelfixierungseinrichtung, die zwischen der Basis (2) und dem Sägeaggregat (10) vorgesehen ist, eine am Sägeaggregat (10) oder an der Basis (2) vorgesehene Spanneinrichtung (11) sowie ein korrespondierend an der Basis (2) oder dem Sägeaggregat (10) vorgesehenes Spannwiderlager (12) aufweist und mit der der Schwenkwinkel des Sägeaggregates (10) gegenüber der Basis (2) (der Gehrungswinkel) kraftschlüssig fixiert wird,
**dadurch gekennzeichnet,**
**daß** das Spannwiderlager (12) als eine mindestens zwei einander gegenüberliegende Spannflächen (15) bildende Leiste, Platte oder Scheibe ausgeführt ist und
**daß** die Spanneinrichtung (11) einen das Spannwiderlager (12) überfassenden Sattel (16) aufweist, der mit jeweils einer Flanke (17) einer Spannfläche (15) des Spannwiderlagers (12) gegenübersteht, und ein mit dem Sattel (16) in Eingriff stehendes, gegenüber dem Sattel (16) verstellbares Spannelement (18) aufweist, das gegen eine Spannfläche (15) anstellbar ist, wobei zeitgleich die gegenüberliegende Flanke (17) des Sattels (16) gegen die gegenüberliegende Spannfläche (15) anstellbar ist, oder das gegen beide Spannflächen (15) zugleich anstellbar ist,
wodurch insgesamt die Spanneinrichtung (11) am Spannwiderlager (12) und damit das Sägeaggregat (10) gegenüber der Basis (2) kraftschlüssig fixiert wird.

2. Gehrungssäge nach Anspruch 1, **dadurch gekennzeichnet,**
**daß** der Sattel (16) das Spannwiderlager (12) mit Spiel überfaßt, insbesondere schwimmend angeordnet ist,
wobei, vorzugsweise, das Spannelement (18) mit einer Flanke (17) des Sattels (16) in Eingriff steht und an der gegenüberliegenden Flanke (17) des Sattels (16) ein feststehendes Gegenstück (21) angeordnet ist.

3. Gehrungssäge nach Anspruch 1 oder 2, **dadurch gekennzeichnet,**
**daß** das Spannelement (18) als Gewindestange ausgeführt und, vorzugsweise, in eine durchgehende Gewindebohrung in einer Flanke (17) des Sattels (16) eingeschraubt ist, und/oder
**daß** beide Flanken (17) des Sattels (16) gegenüber einem Quersteg des Sattels (16) verstellbar sind und das Spannelement (18) an beiden Flanken (17) angreift und diese gegenläufig zueinander verstellt.

4. Gehrungssäge nach einem der Ansprüche 1 bis 3, **dadurch gekennzeichnet,**
**daß** zwischen dem Sattel (16) und dem Spannwiderlager (12), insbesondere an den Spannflächen (15), ein Kraftverteilungselement (22) angeordnet ist, über das das Spannelement (18) am Spannwiderlager (12) angreift,
wobei, vorzugsweise, das Kraftverteilungselement (22) das Spannwiderlager (12) ebenfalls sattelartig überfaßt, und/oder
das Kraftverteilungselement (22) als Metallformteil ausgeführt ist, und/oder
das Kraftverteilungselement (22) zur Befestigung des Sattels (16) am Sägeaggregat (10) bzw. an der Basis (2) ausgebildet ist.

5. Gehrungssäge nach einem der Ansprüche 1 bis 4, **dadurch gekennzeichnet,**
**daß** das Spannwiderlager (11) und/oder der Sattel (16) als Metallteile, insbesondere als Metall-Gußteile, ausgeführt ist/sind.

6. Gehrungssäge nach einem der Ansprüche 1 bis 5, **dadurch gekennzeichnet,**
**daß** am Spannwiderlager (12) zwischen den Spannflächen (15) Formschlußausformungen (24), insbesondere Kerben, voneinander beabstandet vorgesehen sind, über die der Schwenkwinkel des Sägeaggregates (10) gegenüber der Basis (2) mit bestimmten, festen Werten fixierbar ist,
wobei, vorzugsweise, der Sattel (16) und, so vorhanden, das Kraftverteilungselement (22) mittig eine Durchgriffsöffnung (25) für die Formschlußausformungen (24) aufweist.

7. Gehrungssäge nach einem der Ansprüche 1 bis 6, **dadurch gekennzeichnet,**
**daß** das Spannwiderlager (12) als vorzugsweise kreisbogenförmige Nutenschiene ausgeführt ist und die Spanneinrichtung (11) eine in die Nutenschiene eingreifende, zwei nach außen weisende Flanken (17) bildende Spreizeinrichtung aufweist.

8. Gehrungssäge nach einem der Ansprüche 1 bis 7, **dadurch gekennzeichnet,**
**daß** zwischen dem Spannwiderlager (12) und dem Sattel (16) mehrere Flächenpaare vorhanden sind.

9. Gehrungssäge nach einem der Ansprüche 1 bis 8, **dadurch gekennzeichnet,**
**daß** der Sattel (16) mehrteilig ausgeführt ist,
wobei, vorzugsweise, das Spannelement (18) als Exzenterhebel oder -stange zwischen zwei Teilen (16a, 16b) des Sattels (16) ausgeführt ist.

10. Gehrungssäge nach einem der Ansprüche 1 bis 9, **dadurch gekennzeichnet,**
**daß** die Basis (2) eine Grundplatte ist,
**daß** das Sägeaggregat (10) einen an der Grundplatte drehbar gelagerten Drehteller (3) und eine am Drehteller (3) gelagerte Kapp-Sägeeinrichtung (6) aufweist und
**daß** die Schwenkbewegung um die Hochachse des Drehtellers (3) erfolgt.

11. Gehrungssäge nach einem der Ansprüche 1 bis 10, **dadurch gekennzeichnet,**
**daß** die Basis (2) eine feststehende Grundplatte oder ein an einer Grundplatte drehbar gelagerter Drehteller (3) ist,
**daß** das Sägeaggregat (10) eine an der Grundplatte oder am Drehteller (3) schwenkbar gelagerte Kapp-Sägeeinrichtung (6) ist und
**daß** die Schwenkung um eine parallel zu der oder in der Ebene der Grundplatte bzw. des Drehtellers (3) verlaufende Schwenkachse erfolgt.

12. Gehrungssäge mit
einer eine Werkstückauflagefläche (1) bildenden Basis (2), die eine Grundplatte ist,
einem mit der Basis (2) schwenkbar verbundenen Sägeaggregat (10), das einen an der Grundplatte drehbar gelagerten Drehteller (3) und eine am Drehteller (3) gelagerte Kapp-Sägeeinrichtung (6) aufweist,
einer Winkelfixierungseinrichtung, die zwischen der Basis (2) und dem Drehteller (3) vorgesehen ist, und mit der der Schwenkwinkel des Drehtellers (3) gegenüber der Basis (2) (der Gehrungswinkel) kraftschlüssig fixiert wird,
wobei die Winkelfixierungseinrichtung eine am Drehteller (3) oder an der Basis (2) vorgesehene Spanneinrichtung (11) sowie ein korrespondierend an der Basis (2) oder dem Drehteller (3) vorgesehenes Spannwiderlager (12) aufweist,
**dadurch gekennzeichnet,**
**daß** das Spannwiderlager (12) als eine mindestens zwei einander gegenüberliegende Spannflächen (15) bildende Leiste, Platte oder Scheibe ausgeführt ist und
**daß** die Spanneinrichtung (11) einen das Spannwiderlager (12) überfassenden Sattel (16) aufweist, der mit jeweils einer Flanke (17) einer Spannfläche (15) des Spannwiderlagers (12) gegenübersteht, und ein mit dem Sattel (16) in Eingriff stehendes, gegenüber dem Sattel (16) verstellbares Spannelement (18) aufweist, das gegen eine Spannfläche (15) anstellbar ist, wobei zeitgleich die gegenüberliegende Flanke (17) des Sattels (16) gegen die gegenüberliegende Spannfläche (15) anstellbar ist, oder das gegen beide Spannflächen (15) zugleich anstellbar ist, und
**daß** die Winkelfixierungseinrichtung (13) des Drehtellers (3) an der Basis (2) an der Seite des Drehtellers (3) angeordnet ist, an der die Kapp-Sägeeinrichtung (6) am Drehteller (3) gelagert ist.

13. Gehrungssäge nach Anspruch 12, **dadurch gekennzeichnet,**
**daß** die Bedienung der Winkelfixierungseinrichtung (13) von vorne aus erfolgt und das Spannelement (18) bzw. eine das Spannelement (18) ersetzende Konstruktion sich demgemäß von hinten nach vorn quer durch den oder unten dem Drehteller (3) hindurch erstreckt.

14. Gehrungssäge nach Anspruch 12 oder 13, **gekennzeichnet durch** die Merkmale des kennzeichnenden Teils eines oder mehrerer der Ansprüche 2 bis 10.
